# DEMANDE DE BREVET EUROPEEN

(11) **EP 0 682 152 A1**
(43) Date de publication de la demande: **15.11.1995**
(21) Numéro de dépôt: 95420122.4
(22) Date de dépôt: 05.05.1995
(51) Int. Cl.: E01F 9/018, G01C 15/04, E04H 12/22

(54) **Dispositif d'ancrage au sol d'un objet**

(30) Priorité: 09.05.1994 FR 9405956
(71) Demandeur: TELLURA, F-17290 Aigrefeuille D'Aunis (FR)
(72) Inventeur: Guicherd, Michel, F-17290 Aigrefeuille d'Aunis (FR)
(74) Mandataire: Bratel, Gérard

(57) **Abrégé**

Ce dispositif (2) comprend deux plaques (6) sensiblement parallèles, une entretoise centrale (8), perpendiculaire aux plaques (6) et reliant ces dernières l'une à l'autre, plusieurs goussets (9) de renforcement de la liaison entre les plaques (6) et l'entretoise (8), répartis sur le pourtour de l'entretoise (8), et des moyens (15,16) de fixation des objets à ancrer au dispositif (2).

## Description

La présente invention concerne un dispositif d'ancrage au sol d'un objet, notamment d'une borne kilométrique, d'une balise ou panneau de signalisation, d'un poteau ou d'une borne de délimitation d'un terrain.

L'ancrage au sol d'objets ayant une durée d'utilisation relativement limitée ou ayant des dimensions réduites est généralement réalisé au moyen de systèmes d'ancrage simples et faciles à mettre en oeuvre, tels que, par exemple, des piquets à tiges d'ancrage déployables ou à ailettes formant redans.

Lorsque les objets à ancrer ont une durée d'utilisation importante ou des dimensions leur donnant une prise au vent importante, par exemple dans le cas de bornes kilométriques ou de panneaux de signalisation, l'ancrage au sol est traditionnellement réalisé au moyen de béton ou de ciment coulé, venant sceller le socle ou la partie inférieure des objets.

Pour obtenir la stabilité et la résistance dans le temps recherchées, quelle que soit la qualité du sol, il est habituel de couler une quantité de béton ou de ciment qui est importante par rapport au poids ou aux dimensions de l'objet.

Il en résulte une mise en oeuvre difficile et coûteuse, compte tenu des dimensions de la fouille à creuser, de la quantité de béton ou de ciment qui doit être transportée et coulée sur le site, de la nécessité d'évacuer les gravas et de la nécessité de retourner sur le site après la prise du béton pour fixer la partie extérieure de l'objet à l'embase noyée dans le béton ou pour retirer les moyens d'étayage de l'objet, préalablement mis en place pour maintenir ce dernier le temps de la prise du béton.

En outre, certains sols très meubles peuvent rendre incertaine la tenue dans le temps des ancrages ainsi réalisés.

La présente invention vise à remédier à l'ensemble de ces inconvénients.

A cette fin, le dispositif qu'elle concerne comprend deux plaques sensiblement parallèles, une entretoise centrale, perpendiculaire aux plaques et reliant ces dernières l'une à l'autre, plusieurs goussets de renforcement de la liaison entre les plaques et l'entretoise, répartis sur le pourtour de l'entretoise, et des moyens de fixation des objets à ancrer au dispositif.

La fouille destinée à recevoir le dispositif est aménagée de manière telle que la plaque supérieure affleure avec la surface ou se situe légèrement en retrait de celle-ci lorsque la plaque inférieure vient en appui contre le fond de la fouille.

Après rebouchage et tassement du sol autour du dispositif, les plaques, entretoise et goussets prennent appui sur le sol et assurent un parfait ancrage de l'objet tant en basculement qu'en rotation et en arrachement.

La plaque inférieure constitue une assise large et stable au fond de la fouille. Le poids de la terre sur elle empêche tout risque de basculement de l'objet et procure une importante résistance à l'arrachement. L'entretoise, dans la mesure où elle présente une section relativement importante, et la plaque supérieure viennent également prendre appui contre le sol pour assurer un parfait maintien du dispositif.

Les goussets confèrent une très grande solidité aux liaisons plaques-entretoise, répartissant sur l'ensemble des plaques tout effort exercé sur l'objet à ancrer. Du fait de leur répartition sur le pourtour de l'entretoise, ils prennent également appui contre le sol pour s'opposer à ces efforts, quelle que soit la direction dans laquelle ces derniers sont exercés. Ils empêchent également toute possibilité de rotation du dispositif sur lui-même. En outre, ils favorisent l'échappement du soc d'un engin agraire qui viendrait à s'engager sous la plaque supérieure.

Le dispositif selon l'invention peut être monobloc. Toutefois, suivant une forme de réalisation préférée, il est constitué par assemblage de plusieurs éléments, dont deux comprennent chacun l'une des plaques, une partie de l'entretoise et les goussets de renforcement de la liaison entre cette plaque et cette partie d'entretoise. Ces éléments sont avantageusement identiques, ce qui permet d'optimiser leur fabrication.

Des éléments intermédiaires peuvent être prévus pour augmenter la longueur de l'entretoise et donc la profondeur d'enfouissement de la plaque inférieure. Il est ainsi possible de réaliser un ancrage profond, si la nature du sol l'exige.

De préférence, l'entretoise est tubulaire de manière à pouvoir recevoir un piquet ou un poteau que comprend l'objet à ancrer. Dans ce cas, les moyens de fixation de ce piquet ou poteau au dispositif selon l'invention sont avantageusement constitués par une plaquette métallique percée d'un trou de diamètre légèrement inférieur à celui du piquet, la plaquette étant destinée à se déformer lors de l'engagement en force du piquet ou poteau au travers de ce trou. Une telle plaquette assure un assemblage très solide du piquet ou poteau au dispositif.

Selon une forme de réalisation simple, dans le cas où le dispositif est constitué par assemblage de plusieurs éléments, les différents éléments sont assemblés les uns aux autres au moyen de brides et cette plaquette métallique est interposée entre deux brides adjacentes.

Si besoin est, le dispositif peut être utilisé avec un système complémentaire d'ancrage, en particulier un piquet à tiges d'ancrage déployables.

Pour sa bonne compréhension, l'invention est à nouveau décrite ci-dessous en référence au dessin schématique annexé représentant, à titre d'exemple non limitatif, une forme de réalisation préférée du dispositif d'ancrage qu'elle concerne.
La figure 1 en est une vue en perspective éclatée, selon une première forme de réalisation ;
la figure 2 en est une vue en coupe passant par son axe médian, après qu'il ait été mis en place dans le sol et qu'un objet à ancrer ait été fixé à lui ;
la figure 3 en est une vue en perspective selon une deuxième forme de réalisation et
la figure 4 en est une vue en coupe passant par son axe, suivant une troisième forme de réalisation.

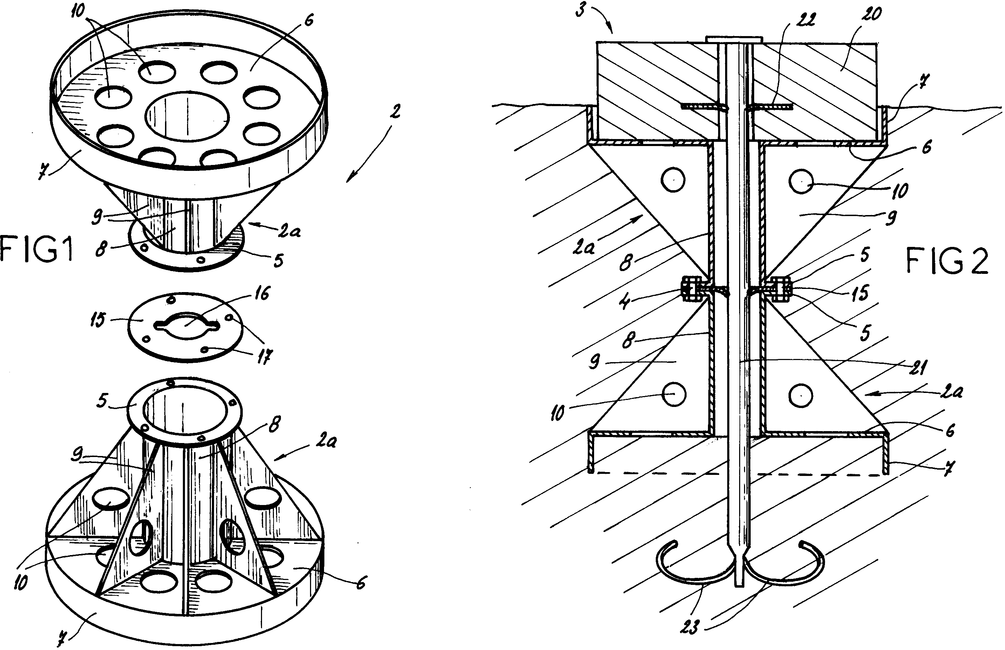

Les figures 1 et 2 représentent un dispositif 2 pour l'ancrage au sol d'une balise 3 de délimitation d'un terrain, dite "balise de géomètre".

Le dispositif 2 est constitué par deux éléments 2a identiques, assemblés l'un à l'autre au moyen de boulons 4 traversant deux brides 5 qu'ils comportent.

Chaque élément 2a comprend :
- une plaque 6 bordée, dans l'exemple représenté, par une paroi périphérique 7,
- une partie tubulaire 8, fixée à la plaque 6 par une extrémité et comportant la bride 5 à son autre extrémité, et
- huit goussets 9 de forme triangulaire, régulièrement répartis sur le pourtour de la partie tubulaire 8, fixés à la plaque 6 et à cette partie tubulaire 8.

Les plaque 6, partie tubulaire 8 et goussets 9 sont percés de trous 10.

En outre, le dispositif 2 comprend une plaquette métallique 15 percée d'un trou central 16, ainsi que de trous périphériques 17 pouvant venir en correspondance des trous des brides 5.

La balise 3 est du type comprenant une tête 20 et un piquet d'ancrage 21. La tête 20 comprend, noyée à l'intérieur d'elle-même, une plaquette 22 qui est similaire à la plaquette 15 à part qu'elle ne comprend pas les trous périphériques 17. Le piquet 21 est tubulaire et comprend intérieurement deux tiges métalliques 23 pouvant être expulsées vers le bas après enfoncement du piquet 21, de manière à venir s'insérer dans le sol. Au cours de leur expulsion, ces tiges 23 viennent porter contre une paroi de l'extrémité inférieure du piquet 21 et se déforment plus ou moins hélicoïdalement.

Le dispositif 2 est constitué par assemblage, au moyen des boulons 4, des deux éléments 2a et de la plaquette 15, cette dernière étant interposée entre les deux brides 5.

Pour l'ancrage de la balise 3 dans le sol, le dispositif 2 ainsi constitué est placé dans une fouille dont la profondeur est telle que la plaque 6 supérieure se situe légèrement en retrait de la surface du sol lorsque la plaque 6 inférieure vient en appui contre le fond de la fouille.

Après rebouchage et tassement du sol autour du dispositif 2, la tête 20 est engagée à l'intérieur de la paroi périphérique 7 jusqu'à venir au contact de la plaque supérieure 6, puis le piquet d'ancrage 21, dont le diamètre extérieur est légèrement supérieur au diamètre du trou 16, est engagé en force successivement au travers des plaquettes 22 et 15.

Les tiges 23 sont ensuite expulsées hors du piquet 21 et viennent s'insérer dans le sol.

Les plaques 6, les parties tubulaires 8 formant une entretoise entre celles-ci et les goussets 9 prennent appui sur le sol et assurent un parfait ancrage de la balise 3 tant en basculement qu'en rotation ou en arrachement.

La plaque 6 inférieure constitue une assise large et stable au fond de la fouille. Le poids de la terre sur elle empêche tout risque de basculement de la balise 3 et procure une importante résistance à l'arrachement. L'entretoise entre les plaques 6 que forment les deux parties tubulaires 8 lorsque les éléments 2a sont assemblés, ainsi que la plaque supérieure 6, viennent également prendre appui contre le sol pour assurer un parfait maintien du dispositif.

Les goussets 9 confèrent une très grande solidité aux liaisons plaques 6-entretoise 8, répartissant sur l'ensemble des plaques 6 tout effort exercé sur la balise 3. Du fait de leur répartition sur le pourtour de l'entretoise 8, ils viennent également prendre appui contre le sol pour s'opposer à ces efforts, quelle que soit la direction dans laquelle ces derniers sont exercés. Ils empêchent également toute possibilité de rotation du dispositif 2 sur lui-même et favorisent, en outre, l'échappement du soc d'un engin agraire qui viendrait à s'engager sous la plaque supérieure 6.

Les tiges 23 viennent, si besoin est compte tenu de la nature du sol, réaliser un ancrage profond de la balise 3. Cet ancrage est purement complémentaire, l'ancrage procuré par le dispositif 2 étant, dans la plupart des cas, suffisant.

Les plaquettes 15 et 22 assurent un assemblage très solide de la tête 20 au piquet 21 d'une part et du piquet 21 au dispositif 2 d'autre part.

En outre, les trous 10 permettent d'éviter que le dispositif 2 remonte en cas de gel de l'eau contenue dans le sol.

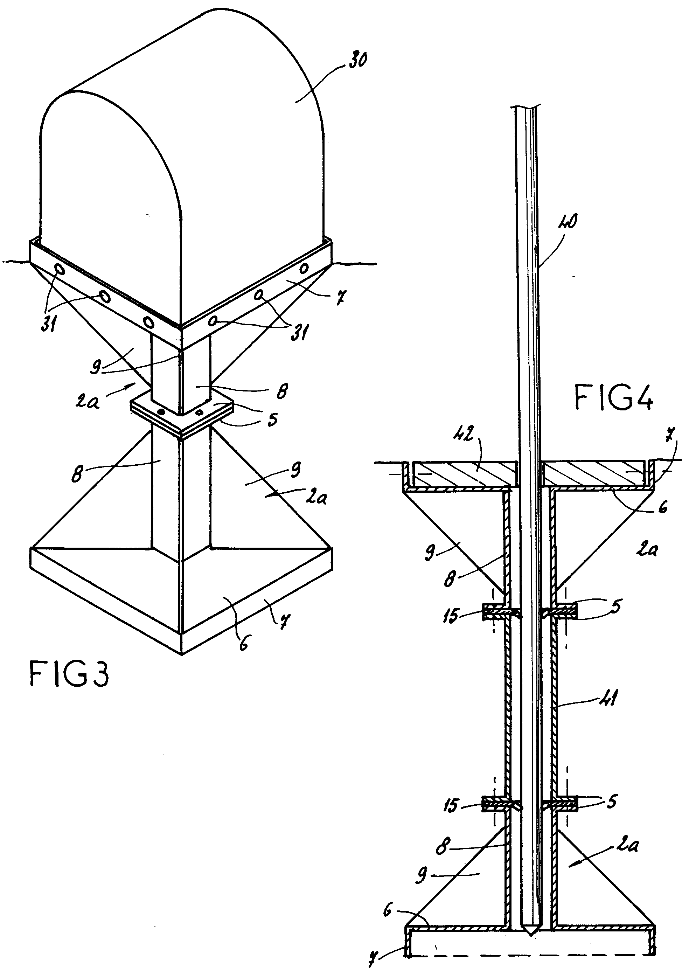

Les figures 3 et 4 décrivent deux autres formes de réalisation du dispositif 2, utilisables respectivement pour l'ancrage d'une borne kilométrique 30 ou du poteau 40 d'un panneau de signalisation.

Les éléments déjà décrits en référence aux figures 1 et 2, qui se retrouvent dans ces deux formes de réalisation, sont désignés, par souci de simplification, par les mêmes références numériques.

Le dispositif 2 représenté à la figure 3 diffère du dispositif représenté aux figures 1 et 2 en ce que les plaques 6 et les parties tubulaires 8 ont une section carrée. La borne 30 peut être simplement boulonnée à la paroi périphérique 7 grâce à des trous 31 aménagés dans celle-ci.

La figure 4 représente un dispositif 2 dans lequel un ou plusieurs éléments intermédiaires 41 peuvent être interposés entre les deux éléments 2a, ces éléments 41 étant tubulaires et comprenant des brides 5 avec interposition éventuelle, entre ces dernières, d'une plaquette 15 telle que précitée. Ces éléments intermédiaires 41 permettent d'augmenter la profondeur d'enfouissement de la plaque 6 inférieure. Il est ainsi possible de réaliser un ancrage profond, si la nature du sol ou la prise au vent de l'objet à ancrer l'exige.

En outre, un disque d'étanchéité 42 peut être engagé à l'intérieur de la paroi périphérique 7.

## Revendications

**1 -** Dispositif d'ancrage au sol d'un objet, notamment d'une borne kilométrique, d'une balise ou panneau de signalisation, d'un poteau ou d'une borne de délimitation d'un terrain, caractérisé en ce qu'il comprend deux plaques (6) sensiblement parallèles, une entretoise centrale (8), perpendiculaire aux plaques (6) et reliant ces dernières l'une à l'autre, plusieurs goussets (9) de renforcement de la liaison entre les plaques (6) et l'entretoise (8), répartis sur le pourtour de l'entretoise (8), et des moyens (15,16) de fixation des objets (3,30,40) à ancrer au dispositif (2).

**2 -** Dispositif d'ancrage selon la revendication 1, caractérisé en ce qu'il est constitué par assemblage de plusieurs éléments (2a,41), dont deux (2a) comprennent chacun l'une des plaques (6), une partie de l'entretoise (8) et les goussets (9) de renforcement de la liaison entre cette plaque (6) et cette partie d'entretoise (8).

**3 -** Dispositif d'ancrage selon la revendication 2, caractérisé en ce que les éléments (2a) sont identiques entre eux et en ce que les éléments (41) sont identiques entre eux.

**4 -** Dispositif d'ancrage selon la revendication 2 ou la revendication 3, caractérisé en ce que des éléments intermédiaires (41) sont prévus pour augmenter la longueur de l'entretoise (8).

**5 -** Dispositif d'ancrage selon l'une des revendications 1 à 4, caractérisé en ce que l'entretoise (8) est tubulaire de manière à pouvoir recevoir un piquet (21) ou un poteau (40) que comprend l'objet à ancrer.

**6 -** Dispositif d'ancrage selon la revendication 5, caractérisé en ce que les moyens de fixation de ce piquet (21) ou poteau (40) sont constitués par une plaquette métallique (15) percée d'un trou (16) de diamètre légèrement inférieur à celui du piquet (21), la plaquette (15) étant destinée à se déformer lors de l'engagement en force du piquet (21) ou poteau (40) au travers de ce trou (16).

**7 -** Dispositif d'ancrage selon la revendication 6, caractérisé en ce que les différents éléments (2a,41) sont assemblés les uns aux autres au moyen de brides (5) et en ce que cette plaquette métallique (15) est interposée entre deux brides (5) adjacentes.

**8 -** Dispositif d'ancrage selon l'une des revendications 1 à 7, caractérisé en ce qu'il est utilisé avec un système complémentaire d'ancrage, en particulier un piquet (21) à tiges d'ancrage déployables (23).
